# EUROPÄISCHE PATENTSCHRIFT

(11) **EP 0 730 759 B1**
(45) Veröffentlichungstag und Bekanntmachung des Hinweises auf die Patenterteilung: **04.08.1999**
(21) Anmeldenummer: 95901403.6
(22) Anmeldetag: 21.11.1994
(51) Int. Cl.: G05B 19/4103

(54) **VERFAHREN UND ANORDNUNG ZUM STEUERN EINER VIELZHAL VON SPRITZWERKZEUGEN FÜR DIE OBERFLÄCHENBESCHICHTUNG VON FAHRZEUGEN ODER DEREN TEILE**
PROCESS AND DEVICE FOR CONTROLLING A MULTIPLICITY OF SPRAY TOOLS USED IN SURFACE COATING OF VEHICLES OR PARTS THEREOF
PROCEDE ET SYSTEME PREMETTANT DE PILOTER UNE PLURALITE D'OUTILS DE PULVERISATION SERVANT A RECOUVRIR LA SURFACE OU DES PARTIES DE VEHICULES

(30) Priorität: 22.11.1993 DE 4339748
(43) Veröffentlichungstag der Anmeldung: 11.09.1996
(73) Patentinhaber: CEGELEC AEG Anlagen- und Automatisierungstechnik GmbH, 60528 Frankfurt (DE)
(72) Erfinder: HISSEN, Hans, D-64291 Darmstadt (DE); SCHUMACHER, Hans, D-70193 Stuttgart (DE)
(74) Vertreter: Dreiss, Fuhlendorf, Steimle & Becker, Patentanwälte
(86) Internationale Anmeldenummer: EP9403844
(87) Internationale Veröffentlichungsnummer: WO9514961

(56) Entgegenhaltungen:
- DE-A- 2 945 660
- GB-A- 1 556 013
- US-A- 4 262 336

## Beschreibung

Die Erfindung bezieht sich auf ein Verfahren und eine Anordnung zum Steuern einer Vielzahl von Spritzwerkzeugen in einer Lackierstraße mittels einer Lackiersteuerung, die eine zentrale, speicherprogrammierbare Steuerung enthält, die Einstellgrößen, die den Lackdurchfluß jedes Spritzwerkzeugs bestimmen, an Stellglieder für die Spritzwerkzeuge ausgeht, die während des Lackierens von Antrieben längs Bahnen bewegt werden, deren Beginn und Ende von Signalen aus der speicherprogrammierbaren Steuerung abhängt, wobei Fahrzeuge oder deren Teile durch die Lackierstraße bewegt werden.

Ein Verfahren und eine der vorstehend beschriebenen Art sind aus der GB-A-1 556 013 bekannt. Die bekannte Anordnung enthält in einer Lackierstation für jede Seite ein vertikal bewegliches Spritzwerkzeug und ein horizontal bewegliches Spritzwerkzeug für die Oberseite von Fahrzeugkarrosserien. Jedes Spritzwerkzeug ist mit einer eigenen Komparatorsteuerung verbunden, in der sechs verschieden lange lineare Bewegungsbahnen für das zugehörige Spritzwerkzeug durch ihre Anfangs- und Endpunkte gespeichert sind. Die sternförmig mit den Komparatorsteuerungen der Spritzwerkzeuge verbundene speicherprogrammierbare Steuerung wählt über ein entsprechendes Signal, das in der Komparatorsteuerung dekodiert wird, jeweils eine dieser vorab gespeicherten, linearen Bewegungsbahnen aus. Die Komparatorsteuerung vergleicht dann die von Sensoren erzeugten Signale mit den von der speicherprogrammierbaren Steuerung ausgewählten Anfangs- und Endpunkte der Bewegungsbahn und gibt bei Erreichen der Anfangs- und Endpunkte jeweils die Spritzwerkzeuge frei oder sperrt diese.

Bekannt ist auch eine numerische Steuerung für die synchrone Bewegung von Maschinenantrieben, die einen zentralen Rechner enthält, der über einen parallelen Hauptcomputerbus mit Sekundärrechnern, die jeweils von einer Motorsteuerung vorgesehen sind, und mit einer sekundären Rechnersteuerung verbunden ist, die über einen zweiten Bus an jeden Sekundärrechner angeschlossen ist. Der relativ langsame zentrale Rechner berechnet Interpolationspunkte aus gespeicherten Befehlsdaten. Sätze von Interpolationspunkten werden vom zentralen Rechner jeweils an die Sekundärrechner überragen. Die Sekundärrechner extrapolieren durch Iteration die empfangenen Interpolationsdaten und erzeugen Motorantriebssignale. Die sekundäre Rechnersteuerung synchronisiert den Betrieb und die zeitlichen Arbeitsgänge des Hauptrechners und der sekundären Rechner (US-A-4,262,336).

Schließlich sind ein Verfahren und eine Vorrichtung zum Ermitteln einer zumindest teilweise gekrümmten Bewegungsbahn eines Werkzeugs bekannt, mit denen durch Interpolation die zwischen Bahnstützpunkten liegenden Zwischenpunkte bestimmt werden. Die zwischen zwei Bahnstützpunkten liegenden gekrümmten Bahnstücke werden zuerst durch Parallelbogen angenähert, die darauf durch einen Polygonzug mittels Linearinter-polation angenähert werden (DE-A-29 45 660).

Bei Autokarosserien weisen viele Teile, z. B. die Außenseiten des Dachs, der Türen, der Haube und des Hecks, gleichförmige Teilgeometrien auf. Diese Teile werden mit Lackierautomaten, insbesondere durch elektrostatisches Sprühen, beschichtet. Die Lackierautomaten besitzen eine Vielzahl von Spritzwerkzeugen, an denen die Autokarosserien vorbeibewegt werden. Um die Spritzwerkzeuge in für die Beschichtung geeigneten Abständen und Winkeln anzuordnen, werden vielfach Antriebs- und Steuereinrichtungen mit mehreren Achsen verwendet. Die Spritzwerkzeuge werden längs vorgegebenen Bahnen bewegt, die von der Form und der Geschwindigkeit der zu beschichtenden Teile abhängen.

Zum Oberflächenbeschichten können pneumatische oder elektrostatische Lackierverfahren eingesetzt werden. Bei den pneumatischen Spritzverfahren erfolgt die Zerstäubung des Lackmaterials in Spritzpistolen. Bei elektrostatischen Spritzverfahren wird zwischen dem Spritzwerkzeug und dem zu lackierenden Gegenstand ein elektrostatisches Feld mit hoher Gleichspannung erzeugt.

Bei der Bewegung der Karosserie in der Lackierstation sind im allgemeinen Spritzwerkzeuge für die oberen Flächen und die seitlichen Flächen der Karosserien gleichzeitig in Betrieb. Die oberen Flächen und die seitlichen Flächen unterscheiden sich in der Geometrie. Darüber hinaus haben die oberen und seitlichen Flächen verschiedene Neigungen gegenüber der Horizontalen bzw. Vertikalen. Um die oberen und seitlichen Flächen richtig zu beschichten, müssen die Spritzwerkzeuge daher mit verschiedenen Geschwindigkeiten bewegt und längs unterschiedlichen Bahnen geführt werden. Auch andere Parameter, z. B. der Lackverbrauch pro Zeiteinheit, können von Spritzwerkzeug zu Spritzwerkzeug unterschiedlich sein.

Aus wirtschaftlichen Gründen werden Lackierautomaten mit einer Vielzahl von Spritzwerkzeugen benutzt, die alle oder größtenteils zugleich in Betrieb sind. Die Spritzwerkzeuge müssen in möglichst optimalen Abständen und Winkelpositionen gegenüber dem jeweils zu beschichtenden Oberflächenteil positioniert werden, um einen gleichmäßigen Lackauftrag zu erreichen. Daher ist es notwendig, wenigstens einen Teil der Spritzwerkzeuge unabhängig voneinander im Raum lage- und winkelmäßig zu positionieren bzw. zu bewegen. Die Spritzwerkzeuge werden z. B. senkrecht auf die jeweils zu beschichtende Oberfläche in gleichbleibenden Abständen ausgerichtet.

Die Steuerungen für die Spritzwerkzeuge bzw. deren Antriebe enthalten Daten für Beschichtungsmuster, die verschieden geformten Oberflächen zugeordnet sind. Diese Daten beziehen sich auf die Einstellungen der Spritzwerkzeuge und der von diesen zu durchlaufenden Bahnen bei den Relativbewegungen zwischen den Spritzwerkzeugen und den zu beschichtenden Oberflächen. Die Programmierung der Steuerungen erfolgt z. B. vor Ort oder in einer separaten Lackierstation mit Hilfe des "Teach-In"-Verfahrens. Auch eine "Off-line"-Programmierung ist zumindest für die Gewinnung grober Bahndaten möglich, die dann z. B. im "Teach-In"-Verfahren korrigiert werden können.

Der Erfindung liegt nun die Aufgabe zugrunde, ein Verfahren und eine Anordnung zum Steuern einer Vielzahl von Spritzwerkzeugen für die Oberflächenbeschichtung von Fahrzeugen oder deren Teile zu entwickeln, wobei der Aufwand für die Steuerung trotz des gleichzeitigen Betriebs mehrerer Spritzwerkzeuge und genauer Positionierung der Spritzwerkzeuge während des Beschichtens gering ist.

Die Aufgabe wird bei einem Verfahren der eingangs beschriebenen Art erfindungsgemäß durch Merkmale des Anspruchs 1 gelöst. Die Sollwerterzeugung für die Lageregler bzw. Folgeregler werden bei diesem Verfahren in grober Form digital zentral erzeugt, wofür eine speicherprogrammierbare Steuerung ausreicht, die insbesondere einen Mikroprozessor enthält. Durch die Erzeugung grober Sollwerte wird an zentraler Stelle der Rechenaufwand reduziert. Die Feininterpolation wird von den Lagereglern selbst durchgeführt. Hierfür sind die Lage- oder Folgeregler insbesondere mit eigenen Mikroprozessoren ausgestattet. Die Feininterpolation kann in einer gewünschten dichten Reihenfolge der Bahnpunkte erfolgen. Aufgrund der Zwischenspeicherung können die speicherprogrammierbare Steuerung und die Prozessoren in den Folgereglern können hierbei ohne zeitliche Unterbrechungen arbeiten, so daß eine optimale Ausnutzung der Steuerungskomponenten stattfindet.
Besonders günstig ist die Bewegung von Spritzwerkzeugen mit Bahngeschwindigkeiten von 2 bis 4 m/min nach dem oben beschriebenen Verfahren. Es handelt sich dabei zweckmäßigerweise um elektrostatisch arbeitende Spritzwerkzeuge. Bei diesen Geschwindigkeiten werden die in Form einer Liste abgespeicherten bzw. grob interpolierten Bahndaten vorzugsweise in zeitlichen Abständen von 100 bis 200 msec an einen Buscontroller ausgegeben. Eine übertragung neuer Bahnpunkte kann an den jeweiligen Lageregler zweckmäßigerweise in zeitlichen Abständen von ca. 10 msec erfolgen. Es hat sich gezeigt, daß beim Arbeiten in den vorstehend beschriebenen Bereichen mit minimalem steuerungstechnischem Aufwand eine qualitativ hochwertige elektrostatische Beschichtung mit geringem Materialverbrauch erreichen wird.

Besonders vorteilhaft ist es, wenn für zu beschichtende Objekte, die sich im wesentlichen nur in der Kontur unterscheiden, vorhandene Bewegungsprogramme für die zu durchlaufenden Bahnen ausgenutzt werden. Die vom jeweiligen Spritzwerkzeug anzufahrenden, grob angegebenen Bahnpunkte sind dabei in wenigstens einer Richtung, in denen die Objekte gleiche Form habe, in Abhängigkeit von der Objektlänge abgespeichert, während die Koordinaten in der anderen Richtung den unterschiedlichen Abmessungen der Objekte angepaßt werden. Es ist dabei nicht notwendig, für jedes Objekt ein eigenes Bewegungsprogramm aufzustellen. Außerdem lassen sich Symmetrieeigenschaften der Objekte insofern ausnutzen, als z. B. für die rechten und linken Seitenflächen an die symmetrische Form angepaßte Bahndaten verwendet werden. Hierdurch läßt sich der Rechenaufwand in der zentralen speicherprogrammierbaren Steuerung wesentlich reduzieren. Es kann daher eine speicherprogrammierbare Steuerung mit geringerer Arbeitsgeschwindigkeit verwendet werden. Alternativ hierzu kann die zentrale speicherprogrammierbare Steuerung auch noch andere Aufgaben übernehmen.

Eine Anordnung zur Durchführung der oben beschrieben Verfahrensmaßnahmen ist erfindungsgemäß durch die Merkmale des Anspruchs 4 beschrieben. Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen:
- Fig. 1: schematisch eine Lackierstation für Kraftfahrzeugkarosserien in Vorderansicht;
- Fig. 2: ein Blockschaltbild einer Steuerung für die Lackierstation gem. Fig. 1;
- Fig. 3: in einer Zentraleinheit der Steuerung gespeicherte oder interpolierte Bahnpunkte als Sollwerte einer Bahn, in der ein Spritzwerkzeug mit dem Antrieb für eine Achse bewegt wird und
- Fig. 4: die an einen Lageregler aus der zentralen Einheit übertragenen Sollwerte, aus denen durch Feininterpolation Sollwerte von Bahnpunkten für den Antrieb einer Achse erzeugt werden.

Eine Lackierstation für die Beschichtung von Fahrzeugkarosserien 1, die auf einem Träger 2 durch die Lackierstation transportiert werden, enthält je zwei elektrostatisch arbeitende Spritzwerkzeuge 3, 4 bzw. 5, 6 für jede Seite der Karosserie 1 und zwei elektrostatisch arbeitende Spritzwerkzeuge 7, 8 für die Haube, das Dach und das Heck der Fahrzeugkarosserie 1.

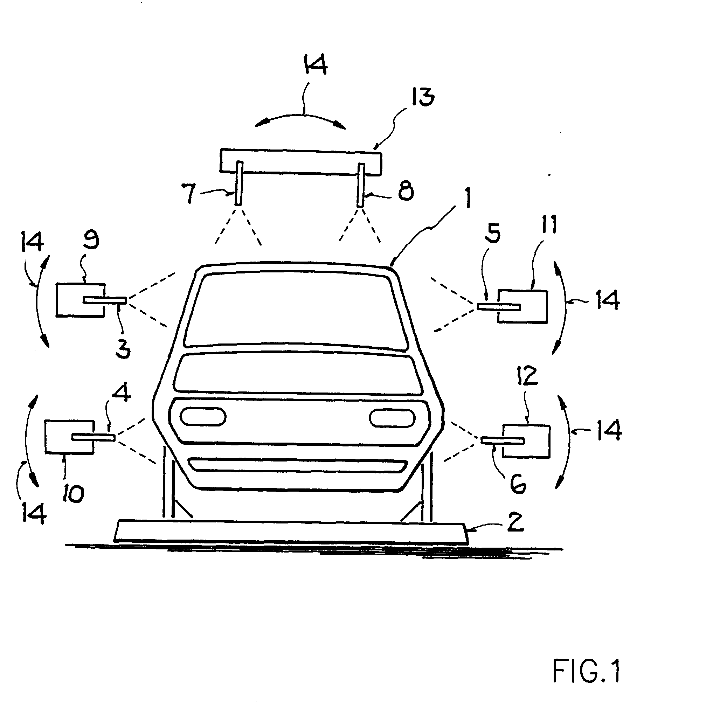

Die Spritzwerkzeuge 3, 4, 5, 6 sind jeweils auf Trägern 9, 10, 11, 12 befestigt, die im Raum dreidimensionale Punkte anfahren können. Die beiden Spritzwerkzeuge 7, 8 sind auf einem gemeinsamen Träger 13 befestigt, der im Raum ebenfalls dreidimensional bewegt werden kann. Für die Bewegung der Träger 9 bis 13 sind jeweils drei Antriebe vorgesehen, die nicht dargestellt sind. Jeder Antrieb ist für die Bewegung in einer Achse eines kartesischen Koordinatensystems bestimmt. Die Verschiebungsmöglichkeit der Träger 9 bis 13 in zwei Richtungen des Koordinatensystems ist in Fig. 1 durch Pfeile 14 dargestellt. Eine Bewegungsmöglichkeit in der dritten Richtung des Koordinatensystems ist aber in vielen Fällen ebenfalls vorhanden. Darüber hinaus sind die Spritzwerkzeuge 9 bis 13 häufig um eine oder mehrere Achsen schwenkbar ausgebildet.

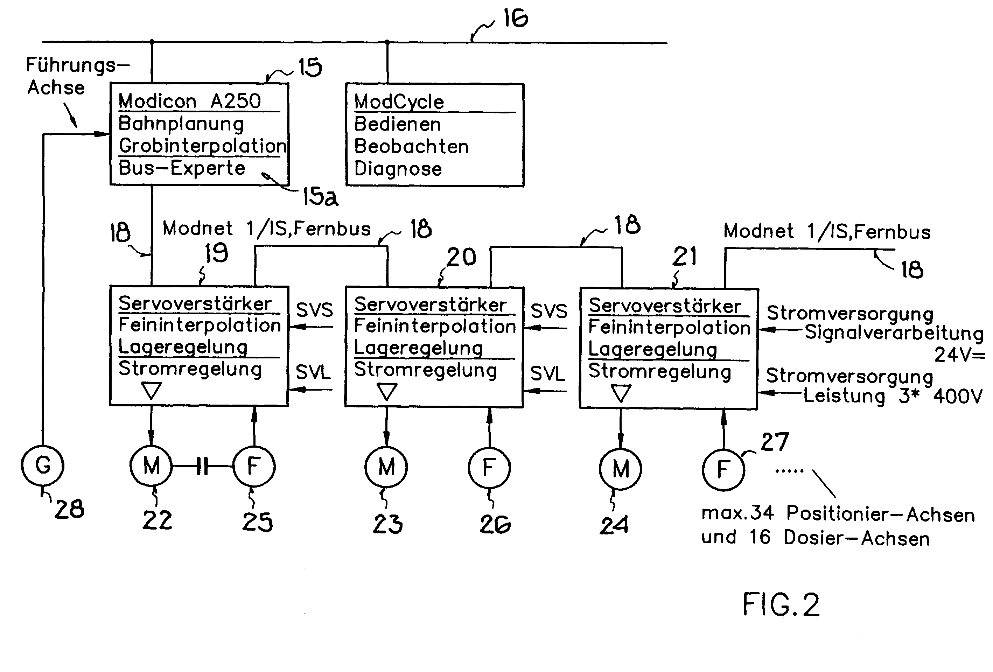

In Fig. 2 ist eine Steuerung für die Spritzwerkzeuge 9 bis 13 im Blockschaltbild dargestellt. Die Steuerung enthält eine speicheprogrammierbare Steuerung 15, also eine Steuerung, die einen freiprogrammierbaren Digitalrechner aufweist, der als Mikroprozessor oder Mikrorechner ausgebildet sein kann. Die Steuerung 15 steht über einen Bus 16 mit einer übergeordneten Steuereinheit in Verbindung. Die in Fig. 1 dargestellte Lackierstation stellt nämlich nur einen Teil einer Lackierstraße dar, die weitere Bearbeitungsstationen, z. B. für die Reinigung und die Beschichtung anderer Flächen des Innenraums der Karosserie, enthält. Durch die übergeordnete Steuereinheit wird die Arbeitsweise der verschiedenen Stationen der Lackierstraße koordiniert.

Die speicherprogrammierbare Steuerung 15 ist über einen seriellen Bus 18 mit Lagereglern 19, 20, 21 verbunden. Die Übertragung auf dem Bus wird durch einen Bus-Experten 15a ausgeführt. In Fig. 2 sind nur drei derartige Lageregler dargestellt, die den Antrieben, beispielsweise des Spritzwerkzeugs 3, zugeordnet sind. Der Lageregler 19 enthält im Regelkreis als Stellglied einen Servomotor 22, der den Träger 9 z. B. in Richtung der X-Achse eines kartesischen Koordinatensystems antreibt. Im Regelkreis mit dem Lageregler 20 ist ein Servomotor 23 vorgesehen, der den Träger 9 in richtung der Y-Achse des kartesischen Koordinatensystems antreibt. Im Regelkreis des Lagereglers 21 ist ein Servomotor 24 vorhanden, der den Träger 9 in Richtung der Z-Achse des kartesischen Koordinatensystems antreibt. In entsprechender Weise sind die Träger 10, 11, 12 und 13 mit Servomotoren für die Bewegung in drei Achsrichtungen verbunden. Die Servomotoren für den Antrieb der Träger 10, 11, 12, 13 sind in Regelkreisen mit Lagereglern auf die oben in Verbindung mit dem Träger 9 beschriebene Art angeordnet. Für manche Anwendungsfälle reichen auch Bewegungen nur in zwei Achsrichtungen des kartesischen Koordinatensystems aus. In diesem Fall genügen je zwei Motoren für den Antrieb eines Trägers. Die Lageregler 19 bis 21 enthalten digitale Rechner, z. B. jeweils einen Mikroprozessor oder Mikrorechner mit einer Schnittstelle zum seriellen Bus 18. Weiterhin sind in den Lagereglern jeweils Geschwindigkeitsregler mit einer Drezahl- und Stromregelung für die elektrischen Motore 22 bis 24 vorgesehen. Mit den Motoren 22, 23, 24 sind jeweils Lageistwertgeber 25, 26, 27 verbunden.

Die speicherprogrammierbare Steuerung 15, im folgenden auch SPS 15 genannt, ist mit einem Geschwindigkeitsgeber 28 verbunden, der die Transportgeschwindigkeit der Karosserie 2 mißt.

Weitere, nicht näher dargestellte Geber zeigen der SPS 15 Positionen der Karosserie 2 an, die für den Beginn und das Ende des Beschichtungsarbeitsgangs maßgebend sind. Der Geber für die Anzeige des Beginns ist im übrigen in einer solchen Position angeordnet, daß die Spritzwerkzeuge aus ihren Ruhelagen bis in die Arbeitspositionen bewegt werden können, bevor die Karosserie 2 in den Bereich der Spritzwerkzeuge 9 bis 8 gelangt.

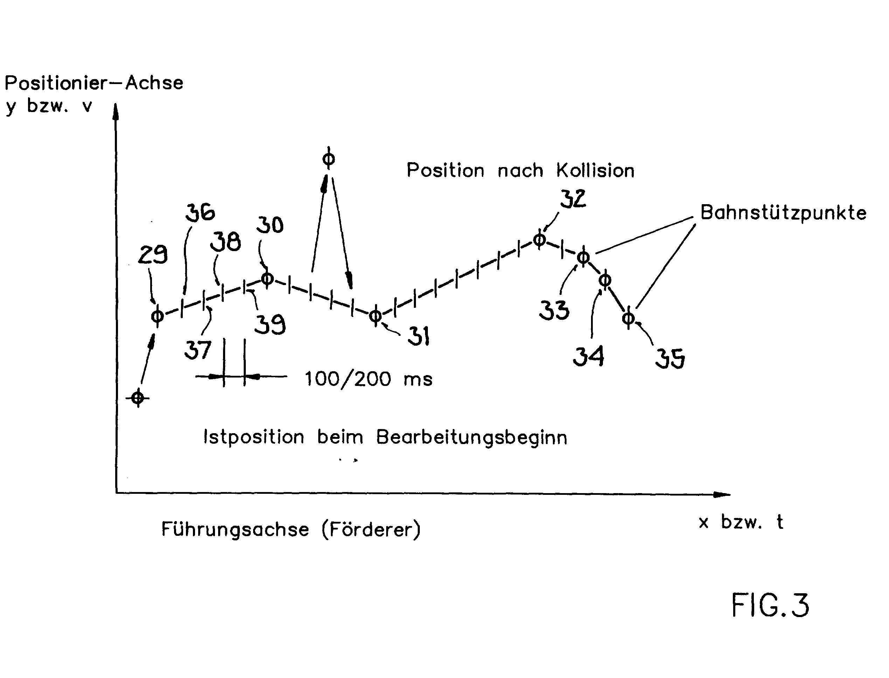

In der SPS 15 sind die von den Spritzwerkzeugen 3 bis 8 für die Beschichtung der Karosserie 2 zurückzulegenden Bahnen in Form von Bahnpunkten in den jeweillgen Achsen des Koordinatensystems gespeichert. Die Bahnpunkte sind vorzugsweise in Listen im Speicher der SPS 15 abgelegt. Die Fig. 3 zeigt mehrere Bahnpunkte 29, 30, 32, 33, 34, 35 einer in X-Y-Richtung vom Spritzwerkzeug 3 zurückzulegenden Bahn. Die Bahnpunkte 29 bis 35 legen jewells Beginn bzw. Ende markanter Bahnabschnitte fest und können nicht nur in X-Richtung sondern auch in Y-Richtung unterschiedlich weit voneinander entfernt sein. Die in Fig. 3 dargestellte X-Richtung entspricht z. B. der Förderrichtung der Karosserie 2.

Aus den beispielsweise von Hand oder von einer übergeordneten Einheit vorgegebenen Bahnpunkten 29 bis 35 bestimmt die SPS 15 durch Grobinterpolation in X-Richtung äquidistante Bahnpunkte, deren Koordinatenwerte als Sollwerte an den Folgeregler 22 bzw. 23 ausgegeben werden.

In Fig. 3 sind nur die von der SPS 15 zwischen den Bahnpunkten 29 und 30 zusätzlich durch Grobinterpolation nach bekannten Interpolationsverfahren berechneten Bahnpunkte 36, 37, 38 und 39 bezeichnet.

Die durch Grobinterpolation gewonnenen Bahnpunkte und die Bahnpunkte 29 bis 31 werden in Übereinstimmung mit dem Busprotokoll des seriellen Busses 18 an die Lageregler 19, 20 übertragen. In gleicher Weise bestimmt die SPS 15 aus vorgegebenen Bahnpunkten für die Lageregler der Spritzwerkzeuge 4 bis 8 durch Grobinterpolation weitere Bahnpunkte und überträgt sie zeitmultiplex entsprechend dem Busprotokoll an die Folgeregler. Die übertragung erfolgt asynchron.

Die Lageregler übernehmen die an sie adressierten, einer Grobinterpolation entsprechenden Sollwerte, speichern sie ab und bilden zwischen aufeinanderfolgenden Sollwerten einer Bahn durch Feininterpolation nach bekannten Interpolationsverfahren weitere Sollwerte. Auf diese Weise entlasten sie die SPS 15 vom Rechenaufwand und den Bus vor einem hohen Datendurchsatz, wie er bei Vorgabe der für eine qualitativ hochwertige Beschichtung bei hohen Transport- und Spritzwerkzeuggeschwindigkeiten notwendig wäre.

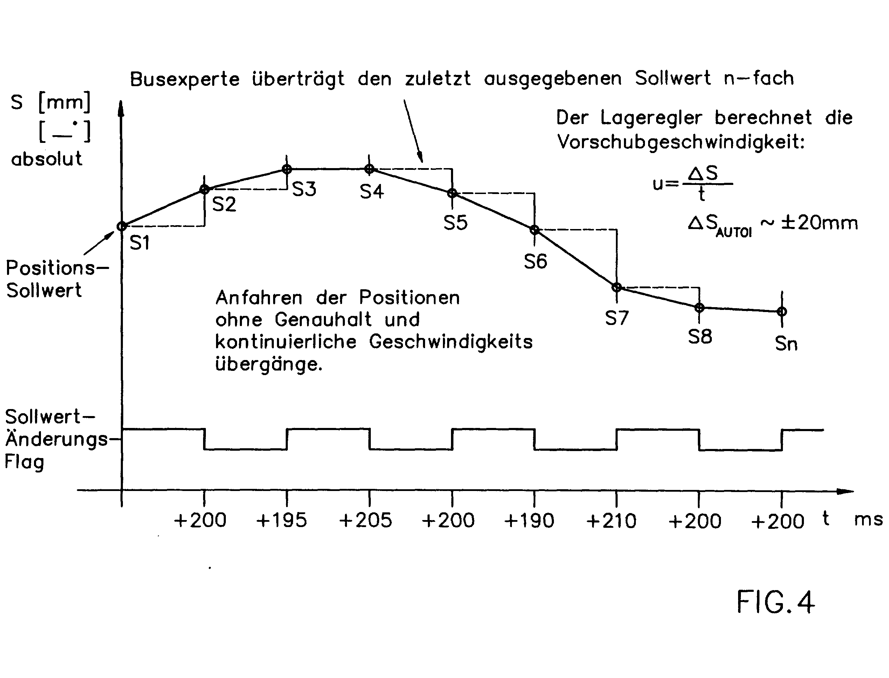

Die Fig. 4 zeigt für den Lageregler 19 die grob interpolierten Sollwerte zwischen einem durch einen Bahnpunkt S1 und einem Bahnpunkt Sn gegebenen Bahnabschnitt. Die Bahnabschnitte S1, Sn gelten hierbei für die X-Richtung. In Fig. 4 ist die zeitliche Erzeugung der Sollwerte S2, S3, S4, S5, S6, S7 und S8 dargestellt. Es wird jeweils ein Sollwert S1...Sn dem Lageregler vorgegeben, der anhand des mit dem Lagegeber 25 gemessenen Istwerts die Feininterpolation ausführt und den Träger 9 zur Verminderung der Regelabweichung nachführt.

Der Lageregler 19 enthält einen unterlagerten Drehzahlregelkreis, dessen Drehzahl aus dem zeitlichen Abstand von aufeinanderfolgend übertragenen Sollwerten bestimmt wird. über den Bus 18 werden die Sollwerte zeitlich nacheinander übertragen. Innerhalb des Rasters können sich die durch Grobinterpolation erhaltenen Sollwerte ändern, müssen dies aber nicht. Der Lageregler 19 berechnet aus jeweils zwei aufeinanderfolgenden Sollwerten eine Differenz, aus der er durch Division mit dem zeltlichen Abstand der Sollwerte die Geschwindigkeit bzw. Drehzahl des Antriebsmotors 22 bestimmt wird. Die Felninterpolation wird nach einem bekannten Interpolationsverfahren durchgeführt.

Für den Bus 18 werden RS 485-Schnittstellen verwendet, wobei Übertragungsraten bis etwa 2 MBd vorgesehen werden können. Die SPS 15 enthält insbesondere nur einen Mikroprozessor für Steuer- und Rechenaufgaben, z. B. einen Prozessor des Typs Intel 80486.

Die Träger 9 bis 13 mit den zugehörigen Antrieben sind jeweils vorzugsweise für Geschwindigkeiten von 2 bis 4 m/min ausgelegt. Die grob interpolierten Sollwerte sind auf Bahnabschnitte von etwa 1 bis 2 cm bezogen.

Es reicht für eine genaue Bahnführung der Spritzwerkzeuge aus, wenn neue Sollwerte in Abständen von 100 bis 200 msec interpoliert undauf dem Bus 18 übertragen werden und die Zahl der Spritzwerkzeuge etwa 12 - 16 (30 Achsen) nicht überschreltet. Der Bus-Experte benötigt für die Übertragung weniger als 100 bis 200 msec, z. B. nur ca. 10 msec, und überträgt daher mehrfach synchron nacheinander die gleichen grob interpolierten Werte.

Als SPS 15 kann ein handelsübliches Automatisierungsgerät mit den oben erwähnten Eigenschaften verwendet werden, wobei eine Speicherkapazität von etwa 4 MB des Speichers des Automatisierungsgeräts ausreichend ist. Mit den vorstehend erwähnten Bahngeschwindigkeiten werden bei Hüben von 2 - 3 m insbesondere elektrostatisch arbeitende Spritzwerkzeuge bei der Karosseriebeschichtung bewegt.

Die Lageregler 22 bis 24 enthalten, wie bereits erwähnt, einen Antriebsrechner für die Feininterpolation sowie Lage- und Geschwindigkeitsregelung. Der Geschwindigkeitsregelkreis ist dem Lageregelkreis unterlagert. Als Antriebsmotore 22, 23, 24 können Gleichstrom- oder Wechselstrommotore verwendet werden. Der Antriebsrechner kann überwachungs- und Diagnoseaufgaben übernehmen und entsprechende Meldungen an die SPS 15 senden.

Zu den wesentlichen Aufgaben der SPS 15 gehört auch die Vorgabe von Einstellwerten, die den Lackdurchfluß der Spritzwerkzeuge bestimmen. Diese Einstellwerte ändern sich im Vergleich zu den Sollwerten wenig. Die Lackierung wird von einer Reihe von Parametern wie Geometrie der Spritzwerkzeuge, der Spritzwerkzeugbahn und der Karosserie, der Lackdurchflußgeschwindigkeit, der Lackdurchflußmenge pro Zeiteinheit, der Zerstäubungs- und Hörnerluft, der elektrischen Feldstärke, der Viskosität sowie den klimatischen Bedingungen der Lackierstation beeinflußt. Die Einstellwerte für das Spritzwerkzeug werden für den jeweiligen Gegenstand vorab ermittelt und gespeichert.

## Patentansprüche

1. Verfahren zum Steuern einer Vielzahl von Spritzwerkzeugen (3, 4, 5, 6, 7, 8) in einer Lackierstraße mittels einer Lackiersteuerung, die eine zentrale speicherprogrammierbare Steuerung (15) enthält, die Einstellgrößen, die den Lackdurchfluß jedes Spritzwerkzeugs (3, 4, 5, 6, 7, 8) bestimmen, an Stellglieder für die Spritzwerkzeuge ausgibt, die während des Lackierens von Antrieben längs Bahnen bewegt werden, deren Beginn und Ende von Signalen aus der speicherprogrammierbaren Steuerung abhängen, wobei Fahrzeuge oder deren Teile (1) durch die Lackierstraße bewegt werden,
dadurch gekennzeichnet,
daß die Spritzwerkzeuge (3, 4, 5, 6, 7, 8, 9) in verschiedenen Stationen der Lackierstraße gesteuert werden, daß von den Spritzwerkzeugen (3, 4, 5, 6, 7, 8, 9) in zwei oder mehr Achsrichtungen eines kartesischen Koordinatensystems anzufahrende Bahnpunkte, die mit grober Teilung in der speicherprogrammierbaren Steuerung (15) gespeichert sind und/oder durch Grobinterpolation aus gespeicherten Bahnpunkten gewonnen werden, als Grob-Sollwerte über einen seriellen Bus (18) an Lageregelkreise (18, 19, 20) mit den jeweiligen Antrieben für die Spritzwerkzeuge (3, 4, 5, 6, 7, 8) übertragen werden, daß die Lageregelkreise (18, 19, 20) unterlagerte Geschwindigkeitsregelkreise sowie wenigstens einen Mikroprozessor aufweisen, wobei die Mikroprozessoren die Grob-Sollwerte zwischenspeichern und durch Feininterpolation zwischen den übertragenen Grob-Sollwerten weitere Bahnpunkte als Fein-Sollwerte bestimmen und mit Lageistwerten verarbeiten und daß die Lageregelkreise (18, 19, 20) jeweils aus der Differenz aufeinanderfolgend übertragener Grob-Sollwerte und dem zeitlichen Abstand zwischen der Übertragung dieser Grob-Sollwerte die Geschwindigkeit für die Drehzahlen der Antriebe bestimmen.

2. Verfahren nach Anspruch 1,
dadurch gekennzeichnet,
daß die Spritzwerkzeuge (3, 4, 5, 6, 7, 8) mit Geschwindigkeiten von 2 bis 4 m/min bewegt werden und daß die grob interpolierten Werte in Bahnabständen in einem Zeitraster von 100 bis 200 msec erzeugt werden.

3. Verfahren nach Anspruch 1 oder 2, dadurch gekennzeichnet,
daß die grob interpolierten Bahnpunkte an die Lageregler (18, 19, 20) in zeitlichen Abständen von 10 msec synchron übertragen werden.

4. Anordnung zum Steuern einer Vielzahl von Spritzwerkzeugen (3, 4, 5, 6, 7, 8) in einer Lackierstraße mittels einer Lackiersteuerung, die eine zentrale speicherprogrammierbare Steuerung (15) enthält, die Einstellgrößen, die den Lackdurchfluß jedes Spritzwerkzeugs (3, 4, 5, 6, 7, 8) bestimmen, an Stellglieder für die Spritzwerkzeuge ausgibt, die während des Lackierens von Antrieben längs Bahnen bewegt werden, deren Beginn und Ende von Signalen aus der speicherprogrammierbaren Steuerung (15) abhängt, wobei Fahrzeuge oder deren Teile (1) durch die Lackierstraße bewegt werden, dadurch gekennzeichnet, daß die Spritzwerkzeuge (3, 4, 5, 6, 7, 8) in verschiedenen Stationen der Lackierstraße angeordnet sind, daß die speicherprogrammierbare Steuerung (15), in der in zwei oder mehr Achsrichtungen eines kartesischen Koordinatensystems von den Spritzwerkzeugen (3, 4, 5, 6, 7, 8) anzufahrende Bahnpunkte (29, 30, 31, 32, 33, 34) als Grob-Sollwerte mit grober Teilung gespeichert sind und/oder durch Grobinterpolation aus den gespeicherten Bahnpunkten bestimmt werden, über einen seriellen Bus (18) mit Lagereglern (18, 19, 20) verbunden ist, von denen je einer einer Bewegungsachse des jewiligen Spritzwerkzeuges (3, 4, 5, 6, 7, 8) zugeordnet ist und einen unterlagerten Geschwindigkeitsregelkreis sowie wenigstens einen Mikroprozessor enthält, der die für den Lageregler (18, 19, 29) bestimmten Grob-Sollwerte zwischenspeichert und aus den auf dem Bus (18) übertragenen Grob-Sollwerten durch Feininterpolation Bahnpunkte bestimmt, die als Fein-Sollwerte der Lageregelung zugrunde gelegt werden, und daß die Lageregler (18, 19, 20) jeweils aus zwei aufeinanderfolgenden Grob-Sollwerten eine Differenz berechnen, aus der durch die Division mit dem zeitlichen Abstand der Übertragung dieser Grob-Sollwerte die Geschwindigkeit für die Drehzahlen der Antriebe bestimmt wird.

## Claims

1. A process for controlling a plurality of spray tools (3, 4, 5, 6, 7, 8) in a paint line by means of a painting control including a central memory-programmable control (15) which outputs setting values which determine the paint flow through each spray tool (3, 4, 5, 6, 7, 8) to control members for the spray tools which are moved during the painting operation by drives along trajectories whose beginning and end depend on signals from the memory-programmable control, wherein vehicles or parts (1) thereof are moved through the paint line, characterised in that the spray tools (3, 4, 5, 6, 7, 8, 9) are controlled in various stations of the paint line, that points on the trajectories to which the spray tools (3, 4, 5, 6, 7, 8, 9) are to go in two or more axis directions of a cartesian co-ordinate system and which are stored with a coarse spacing in the memory-programmable control (15) and/or obtained by coarse interpolation from stored points on the trajectories are transmitted as coarse reference values by way of a serial bus (18) to position regulating circuits (18, 19, 20) with the respective drives for the spray tools (3, 4, 5, 6, 7, 8), that the position regulating circuits (18, 19, 20) have subordinate speed regulating circuits and at least one microprocessor, wherein the microprocessors provide for intermediate storage of the coarse reference values and by fine interpolation between the transmitted coarse reference values determine further points on the trajectories as fine reference values and process same with position actual values, and that the position regulating circuits (18, 19, 20) respectively determine from the difference between successively transmitted coarse reference values and the time interval between the transmission of those coarse reference values the speed for the rotational speeds of the drives.

2. A process according to claim 1 characterised in that the spray tools (3, 4, 5, 6, 7, 8) are moved at speeds of between 2 and 4 m/min and that the coarsely interpolated values are produced at spacings on the trajectories in a time pattern of 100 to 200 msec.

3. A process according to claim 1 or claim 2 characterised in that the coarsely interpolated points on the trajectories are synchronously transmitted to the position regulators (18, 19, 20) at time intervals of 10 msec.

4. An arrangement for controlling a plurality of spray tools (3, 4, 5, 6, 7, 8) in a paint line by means of a painting control including a central memory-programmable control (15) which outputs setting values which determine the paint flow through each spray tool (3, 4, 5, 6, 7, 8) to control members for the spray tools which are moved during the painting operation by drives along trajectories whose beginning and end depend on signals from the memory-programmable control, wherein vehicles or parts (1) thereof are moved through the paint line, characterised in that the spray tools (3, 4, 5, 6, 7, 8) are arranged in various stations of the paint line, that the memory-programmable control (15) in which points (29, 30, 31, 32, 33, 34) on the trajectories to which the spray tools (3, 4, 5, 6, 7, 8) are to go in two or more axis directions of a cartesian co-ordinate system are stored as coarse reference values with a coarse spacing and/or are determined by coarse interpolation from the stored points on the trajectories is connected by way of a serial bus (18) to position regulators (18, 19, 20), a respective one of which is associated with a line of movement of the respective spray tool (3, 4, 5, 6, 7, 8), and includes a subordinate speed regulating circuit and at least one microprocessor which provides for intermediate storage of the coarse reference values determined for the position regulators (18, 19, 20) and determines by fine interpolation from the coarse reference values transmitted on the bus (18) points on the trajectories which form the basis as fine reference values for position regulation, and that the position regulators (18, 19, 20) respectively calculate from two successive coarse reference values a difference from which the speed for the rotational speeds of the drives is determined by division by the time interval of the transmission of those coarse reference values.

## Revendications

1. Procédé pour piloter une pluralité d'outils de pulvérisation (3, 4, 5, 6, 7, 8) disposés dans une voie de peinture, au moyen d'un système de commande de peinture qui comprend une commande centrale (15) à programme enregistré qui délivre des données de réglage, qui déterminent le débit de chaque outil de pulvérisation (3, 4, 5, 6, 7, 8), à des éléments de réglage pour les outils de pulvérisation qui sont déplacés, pendant l'opération de peinture, par des dispositifs d'entraînement le long de trajectoires dont le début et la fin sont fonction de signaux provenant de la commande à programme enregistré, des véhicules (1) ou des parties de ceux-ci étant déplacés dans la voie de peinture,
caractérisé
en ce que les outils de pulvérisation (3, 4, 5, 6, 7, 8) sont pilotés dans différentes stations de la voie de peinture, en ce que, à partir des outils de pulvérisation (3, 4, 5 6, 7, 8), on transmet des points de trajectoire à parcourir dans au moins deux directions d'un système d'axes de coordonnées cartésiennes, lesdits points de trajectoire étant enregistrés avec une graduation grossière dans la commande à programme enregistré (15) et/ou obtenus par interpolation grossière à partir de points de trajectoire enregistrés, en tant que valeurs grossières de consigne, par l'intermédiaire d'un bus série (18), à des circuits de régulation de position (18, 19, 20) qui comportent les dispositifs respectifs d'entraînement pour les outils de pulvérisation (3, 4, 5, 6, 7, 8), en ce que les circuits de régulation de position (18, 19, 20) comportent des circuits de régulation de vitesse en cascade ainsi qu'au moins un microprocesseur, les microprocesseurs enregistrant les valeurs grossières de consigne de manière temporaire et, par interpolation fine entre les valeurs grossières de consigne transmises, déterminant d'autres points de trajectoire en tant que valeurs fines de consigne et travaillant avec des valeurs réelles de position, et en ce que les circuits de régulation de position (18, 19, 20) déterminent, à chaque fois, à partir de la différence entre des valeurs grossières de consigne transmises successivement et de la distance temporelle entre la transmission de ces valeurs grossières de consigne, la vitesse pour la vitesse de rotation des dispositifs d'entraînement.

2. Procédé selon la revendication 1, caractérisé en ce que les outils de pulvérisation (3, 4, 5, 6, 7, 8) sont déplacés à une vitesse de 2 à 4 m/minute et en ce que les valeurs interpolés de manière grossière sont produites pour des distances de points de trajectoire correspondant à des tranches de temps de 100 à 200 ms.

3. Procédé selon la revendication 1 ou 2, caractérisé en ce que les points de trajectoire à interpolation grossière sont transmis de manière synchrone aux régulateurs de position (18, 19, 20) à des distances de temps de 10 ms.

4. Dispositif pour piloter une pluralité d'outils de pulvérisation (3, 4, 5, 6, 7, 8) disposés dans une voie de peinture, au moyen d'un système de commande de peinture qui comprend une commande centrale (15) à programme enregistré qui délivre des données de réglage, qui déterminent le débit de chaque outil de pulvérisation (3, 4, 5, 6, 7, 8), à des éléments de réglage pour les outils de pulvérisation qui sont déplacés, pendant l'opération de peinture, par des dispositifs d'entraînement le long de trajectoires dont le début et la fin sont fonction de signaux provenant de la commande à programme enregistré (15), des véhicules (1) ou partie de ceux-ci étant déplacés dans la voie de peinture, caractérisé en ce que les outils de pulvérisation (3, 4, 5, 6, 7, 8) sont disposés dans différentes stations de la voie de peinture, en ce la commande à programme enregistré (15), dans laquelle des points de trajectoire à parcourir dans au moins deux directions d'un système d'axes de cooordonnées cartésiennes sont, en tant que valeurs grossières de consigne, enregistrés avec une graduation grossière dans la commande à programme enregistré (15) et/ou déterminés par interpolation grossière à partir des points de trajectoire enregistrés, est reliée, par l'intermédiaire d'un bus série (18), à des circuits de régulation de position (18, 19, 20) dont chacun est associé à un axe de déplacement de l'outil de pulvérisation (3, 4, 5, 6, 7, 8) correspondant et comprend un circuit de régulation de vitesse en cascade ainsi qu'au moins un microprocesseur qui enregistre de manière temporaire les valeurs grossières de consigne déterminées pour les régulateurs de position (18, 19, 20) et qui détermine, à partir des valeurs grossières de consigne transmises sur le bus (18), par interpolation fine, des points de trajectoire qui, en tant que valeurs fines de consigne, sont à la base de la régulation de position et en ce que les circuits de régulation de position (18, 19, 20) calculent, à chaque fois, à partir de deux valeurs grossières de consigne successives, une différence à partir de laquelle on détermine, par la division par la distance temporelle de la transmission de ces valeurs grossières de consigne, la vitesse pour la vitesse de rotation des dispositifs d'entraînement.
